Europäisches Patentamt

European Patent Office

Office européen des brevets

(19)

(11) Veröffentlichungsnummer : **0 011 192 B1**

## (12) EUROPÄISCHE PATENTSCHRIFT

(45) Veröffentlichungstag der Patentschrift : **17.03.82**

(21) Anmeldenummer : **79104255.9**

(22) Anmeldetag : **02.11.79**

(51) Int. Cl.$^3$ : **C 08 F 6/20**, C 08 F 14/06

---

(54) **Verfahren zur Aufbereitung von wässrigen (Co-)Polymerisatdispersionen, die bei der Emulsionspolymerisation von Vinylchlorid erhalten werden.**

---

(30) Priorität : **11.11.78 DE 2849087**.

(43) Veröffentlichungstag der Anmeldung :
**28.05.80 (Patentblatt 80/11)**

(45) Bekanntmachung des Hinweises auf die Patenterteilung : **17.03.82 Patentblatt 82/11**

(84) Benannte Vertragsstaaten :
**DE FR GB IT**

(56) Entgegenhaltungen :
**FR - A - 1 141 246**
**US - A - 3 772 226**

**CHEMICAL ABSTRACTS, Band. 70, Nr. 1, 16,
21. April 1969, Seite 11, Nr. 6884k Columbus,
Ohio, U.S.A.**

(73) Patentinhaber : **BASF Aktiengesellschaft
Carl-Bosch-Strasse 38
D-6700 Ludwigshafen (DE)**

(72) Erfinder : **Pyrlik, Manfred, Dr.
Berner Weg 34
D-6700 Ludwigshafen (DE)**

Imprimerie Jouve, 18, rue St-Denis, 75001 Paris, France

# 0 011 192

Verfahren zur Aufbereitung von wäßrigen (Co-)Polymerisatdispersionen, die bei der Emulsionspolymerisation von Vinylchlorid erhalten werden

Gegenstand der Anmeldung ist ein Verfahren zur Aufbereitung von Polymerisat bzw. Copolymerisatdispersionen, die durch Emulsionspolymerisation von Vinylchlorid, bzw. damit copolymerisierbaren
Monomeren anfallen, und wobei durch Zugabe eines wasserlöslichen MSA-Copolymerisates zu der
Dispersion beim anschließenden Zentrifugieren zwei leichtfließende, flüssige Phasen erhalten werden.
Die spezifisch schwerere Phase ist die polymerisatreiche Phase, die nach üblichen Methoden getrocknet
werden kann.

Die bei der technischen Durchführung der Emulsions-Polymerisation von Vinylchlorid (VC) erhaltenen Latices weisen in der Regel Feststoffgehalte von ungefähr 30 bis 50 % auf und werden üblicherweise
durch Verdüsung in einem Sprühtrockner oder durch Aufbringen auf eine rotierende beheizte Walze
(Walzentrocknung) getrocknet. Der Vorteil der Sprühtrocknung besteht z.B. darin, daß aus ein- und
demselben Latex durch die Variation der Trocknungsbedingungen Produkte hergestellt werden können,
die für verschiedenste Verarbeitungsprozesse geeignet sind (z.B. Weichverarbeitung nach dem dryblend-oder Pasten-Verfahren, rieselfähige Hart-Einstellungen). Diese Variabilität ist aus betrieblicher
Sicht äußerst wünschenswert.

Nachteilig bei der Sprüh- oder Walzentrocknung ist, daß das gesamte im Latex befindliche Wasser
verdampft werden muß, was verhältnismäßig hohe Trocknungskosten und ungünstige Kapazitätsauslastung der Trocknungsanlagen verursacht. Darüber hinaus verbleiben alle Polymerisationshilfsstoffe wie Emulgatoren, Puffersalze usw. im Produkt, was vielfach zu unerwünschten Eigenschaften der
aus dem Polymerisat hergestellten Fertigteile, wie mangelnde Transparenz, hohe Feuchtigkeitsaufnahme
und ungenügende elektrische Isoliereigenschaften führt.

Für die Aufarbeitung von Latices zu pulverförmigen Polymerisaten sind schon verschiedene
Vorschläge in der Patentliteratur zu finden, von denen die vorliegende Erfindung ausgeht und die
nachstehend genannt sind.

1. Veröffentlichte deutsche Patentanmeldung C 3544/39c
2. DE-AS 10 09 810
3. DE-PS 811 159
4. US-PS 2,563,055
5. DD-PS 124 807
6. US-PS 3,901,842

Aus 1. ist es bekannt, die wäßrige Phase und die Polymerisatteilchen (Feststoff) des PVC-Latex auf
mechanischem Wege zu trennen, z.B. durch Zentrifugieren. Mit den handelsüblichen technischen
Zentrifugen ist jedoch nur eine teilweise Trennung möglich ; die kleineren Latexteilchen, die insbesondere bei der kontinuierlichen Emulsionspolymerisation einen Großteil des Gesamtproduktes ausmachen,
verbleiben in der wäßrigen Phase.

Es wurde deshalb schon vorgeschlagen, die Latexpartikelchen zu koagulieren um den Latex
filtrierbar bzw. besser zentrifugierbar zu machen. Als Koagulationsmittel sind u.a. Elektrolyte, Säuren
oder schutzkolloidartige Polymere (vgl. 2.) bzw. die Anwendung höherer Temperaturen (vgl. 3.) oder
intensive mechanische Scherung (vgl. 4.) bzw. koagulieren durch Ausfrieren vorgeschlagen worden.

Alle vorstehend erwähnten Maßnahmen, verbunden mit anschließendem Zentrifugieren ermöglichen
ein mehr oder weniger weitgehendes Aufkonzentrieren des Latex bis zu einem Feststoffgehalt von 70 bis
75 %. Bei allen bekannten Verfahren fällt jedoch die polymerisatreiche Phase nach dem Zentrifugieren in
Form eines Festkörpers an. Dies ist auch der Fall bei dem aus 5. bekannten Verfahren, bei dem mittels
ionogener bzw. nicht ionogener Dispergatoren eine Koagulation erzielt wird, so daß schließlich ein
Filterkuchen mit einem auf den Feststoff bezogenen Feuchtigkeitsgehalt von 24 bis 30 % erhalten wird.
Die Aufarbeitung des Filterkuchens erfolgt in einem Stromtrockner.

Die bei den bekannten Verfahren anfallenden Filterkuchen müssen daher mit den bei der Emulsions-
PVC üblicherweise nicht eingesetzten Trocknern, wie Strom- oder Trommeltrockner aufgearbeitet
werden, da sie eine für die Sprühtrocknung erforderliche Dünnflüssigkeit nicht mehr aufweisen. Das von
der üblichen Emulsions-PVC-Herstellung abweichende Aufarbeitungsverfahren führt daher zu Produkten, die das vom Verarbeiter geschätzte, für Emulsions-PVC typische Erscheinungsbild aufgrund der
anders gearteten Morphologie nicht besitzen. Besonders schwerwiegend ist, daß sich bei allen auf
Koagulation beruhenden Aufarbeitungsverfahren vereinzelt sehr grobteilige Pulverteilchen bilden, die zu
unerwünschten Stippen beim Fertigteil (insbesondere bei Folien) führen können. In der Regel müssen
daher die mit Strom- oder Trommeltrockner aufgearbeiteten Produkte noch gemahlen werden, was einen
zusätzlichen Verfahrensschritt bedeutet, und auch negative Veränderungen der Produkteigenschaften
zur Folge haben kann.

Es ist deshalb auch schon vorgeschlagen worden (vgl. 6.), beim Zentrifugieren erhaltene
Filterkuchen durch Zugabe von Polyacrylaten wieder zu verflüssigen, um die verflüssigte Dispersion
sprühtrocknen zu können. Dieses Verfahren erfordert jedoch einen zusätzlichen Aufwand, der die
Kostenvorteile der energiesparenden Trocknung wieder reduziert ; darüber hinaus besteht die Gefahr,

**0 011 192**

daß die Redispergierung des Filterkuchens nur unvollkommen gelingt, so daß Verstopfungen der Leitung, der Filter, der Pumpen und schließlich der Sprühtrocknungsdüsen resultieren können.

Es bestand daher die Aufgabe, die vorstehend geschilderten Nachteile der aus 1. bis 6. bekannten Verfahren, insbesondere der Verfahren 5. und 6. zu vermeiden. Diese Aufgabe wird dadurch gelöst, daß zu den bei der Emulsionspolymerisation anfallenden Latices vor dem Zentrifugieren wasserlösliche MSA-Copolymerisate zugegeben werden, so daß beim anschließenden Zentrifugieren zwei leichtfließende, flüssige Phasen erhalten werden. Die spezifisch schwerere, polymerisatreiche Phase, die Feststoffgehalte bis zu 75 Gew.% aufweisen kann, kann unmittelbar der weiteren Trocknung, insbesondere der Sprühtrocknung unterworfen werden. Das erfindungsgemäße Verfahren weist gegenüber dem bekannten Verfahren verfahrenstechnische Vorteile auf, insbesondere zeigen jedoch die nach dem erfindungsgemäßen Verfahren hergestellten Feststoffe einen erheblich geringeren Gehalt an Hilfsstoffen.

Die Erfindung betrifft somit ein Verfahren zur Aufbereitung von wäßrigen (Co-)Polymerisatdispersionen, die durch Emulsionspolymerisation von Vinylchlorid oder bis zu 50 Gew.% an mit Vinylchlorid copolymerisierbaren Monomeren erhalten worden sind, und die Feststoffgehalte von ungefähr 25 bis 50 Gew.% aufweisen, durch Zugabe von nicht ionogenen Dispergiermitteln unter Rühren und ggf. unter Erwärmen und anschließendes Zentrifugieren unter Auftrennung der (Co-)Polymerisat-Dispersion in eine polymerisatreiche Phase und eine polymerisatarme flüssige Phase und Trocknung der polymerisatreichen Phase, das dadurch gekennzeichnet ist, daß man als nicht ionogenes Dispergiermittel 0,05 bis 5 Gew.%, bezogen auf PVC oder dessen Copolymerisate, eines wasserlöslichen Maleinsäureanhydrid-Copolymerisates zugibt und nach dem Zentrifugieren zwei leichtfließende, flüssige Phasen,

    a) eine spezifisch schwerere, polymerisatreiche Phase und
    b) eine spezifisch leichtere, polymerisatarme Phase gewinnt.

Die Emulsionspolymerisation von Vinylchlorid ist seit langem bekannt (vgl. H. Kainer « Polyvinylchlorid und Vinylchlorid-Mischpolymerisate » Springer-Verlag, 1965, Seiten 34 bis 59). Als copolymerisierbare Monomere bei der Emulsionspolymerisation von Vinylchlorid kommen folgende Monomere in Betracht : Vinylidenchlorid, Vinylester, wie Vinylacetat oder Vinylpropionat, Vinylether, Acrylester, Acrylnitril oder Olefine, wie Ethylen oder Propylen, ungesättigte Dicarbonsäuren, ggf. teilweise oder ganz verestert, wie Maleinsäure, Fumarsäure, Itaconsäure, Maleinsäuremonomethylester oder Maleinsäuredibutylester und dgl. Für die Herstellung von Latices nach dem Emulsionspolymerisationsverfahren kann Vinylchlorid allein oder in Mischung mit den vorstehend genannten copolymerisierbaren Monomeren, die in Mengen von bis zu 50 Gew.% angewendet werden können, eingesetzt werden. Die Monomerenmischungen können insbesondere bis zu 30 Gew.%, vorzugsweise bis zu 15 Gew.%, bezogen auf die Monomerenmischung, an copolymerisierbaren Monomeren enthalten.

Bei der Emulsionspolymerisation von Vinylchlorid bzw. bei der Copolymerisation mit den mit VC copolymerisierbaren Monomeren begrenzt man in der Regel den Feststoffgehalt in der erhaltenen Dispersion auf etwa 50 %. In der Regel fallen bei technischen Verfahren Latices mit Feststoffgehalten von 30 bis 50, insbesondere solche mit 40 bis 50 Gew.% Feststoff an. Die vorstehend genannte untere Grenze ist für die Durchführung des erfindungsgemäßen Verfahrens nicht kritisch, jedoch sind Verfahren, bei denen Feststoffgehalte unterhalb von etwa 30 % anfallen, nicht wirtschaftlich.

Nach dem erfindungsgemäßen Verfahren können alle durch übliche Emulsionspolymerisationsverfahren hergestellten Latices von VC und den damit polymerisierbaren Comonomeren aufgearbeitet werden. Insbesondere ist die·Art des Hilfsstoffsystems, z.B. des Emulgators ohne Belang für die erfindungsgemäße Aufarbeitung, ebenso wie der K-Wert, der im Bereich von 50 bis 80 für das im Latex vorliegende Polymerisat oder Copolymerisat liegen kann (Bestimmung des K-Wertes nach DIN 53 726 für Polymerisate, Polyvinylchlorid und Copolymerisate). Bei Variation der Emulgatormenge, bzw. des Molekulargewichts der Dispersion sind lediglich einige orientierende Versuche des Fachmanns erforderlich, um die geeignete Menge an nicht ionogenem Dispergiermittel zu ermitteln. Dasselbe gilt bei Verwendung nicht üblicher Puffersysteme.

Die Aufbereitung der wäßrigen (Co-)Polymerisatdispersion kann erfolgen, ausgehend von Latices, die durch kontinuierliche oder durch diskontinuierliche Polymerisation hergestellt worden sind. Die Vorteile des erfindungsgemäßen Verfahren kommen jedoch bei einer durch kontinuierliche Emulsionspolymerisation hergestellten Dispersion besonders zum Tragen, weil bei diesen die Hilfsstoffkonzentration verfahrensbedingt um den Faktor 2 bis 3 höher ist als bei den durch diskontinuierliche Verfahren hergestellten Emulsionspolymerisaten bzw. Dispersionen.

Als nicht ionogene Dispergiermittel im Sinne der vorliegenden Erfindung kommen wasserlösliche Maleinsäureanhydrid-copolymerisate in Betracht. Als Comonomere, die mit MSA wasserlösliche Copolymerisate ergeben, seien genannt Acrylsäure sowie deren Ester, Methacrylsäure und deren Ester Acrylnitril, Olefine, wie Äthylen oder Propylen sowie Vinylverbindungen wie Alkylvinyläther, Vinylhalogenide usw. Besonders bevorzugt werden die Copolymerisate des Maleinsäureanhydrids mit Alkylvinyläthern angewendet, die bis zu 4 C-Atome in der Alkylgruppe aufweisen. Alkylvinyläther mit mehr als 4 C-Atomen in der Alkylgruppe setzen die Wasserlöslichkeit des Copolymerisates herab. Die nicht ionogenen Dispergiermittel sollen Viskositätszahlen im Bereich von 0,1 bis 10 bzw. bevorzugt im Bereich von 0,5 bis 5, besitzen. Die Viskositätszahl wird in einer 1 % Lösung Methyläthylketon bei 25 °C gemessen. Das selbe gilt für den K-Wert nach Fikentscher für das in Beispiel 11 genannte Copolymerisat. Besonders bevorzugt werden MSA-Copolymerisate mit Viskositätszahlen im Bereich von 1 bis 4,5.

3

Die Zugabe der nicht ionogenen Dispergiermittel erfolgt vor dem Zentrifugieren unter Rühren sowie ggf. unter Erwärmen. Die Dispergiermittel werden in Mengen von 0,05 bis 5 Gew.%, bezogen auf Polyvinylchlorid oder dessen Copolymerisate angewendet. Bei der Anwendung von Mengen unterhalb von 0,05 % wird der Trenneffekt beim Zentrifugieren geringer, d.h. die spezifisch schwerere Phase weist einen geringeren Feststoffgehalt auf oder mit anderen Worten, es erscheint mehr Wertstoff in der spezifisch leichteren, polymerisatarmen Phase. Das erfindungsgemäße Verfahren arbeitet auch noch bei Mengen von oberhalb von 5 Gew.%. Es ist jedoch unwirtschaftlich, höhere Mengen an Maleinsäurecopolymerisat anzuwenden, da dieses Produkt teuer ist und außerdem die Gefahr besteht, daß die polymerisatreiche Phase nicht mehr fließfähig ist. Die nicht ionogenen Dispergiermittel werden in der Regel in Mengen von 0,1 bis 1,0 Gew.%, besonders bevorzugt in Mengen von 0,2 bis 0,5 Gew.% angewendet.

Wie vorstehend erwähnt, werden die nicht ionogenen Dispergiermittel unter Rühren zu der Dispersion des (Co-)Polymerisats gegeben. Das Rühren soll so erfolgen, daß eine ausreichende Durchmischung erfolgt, die Drehzahl soll nicht zu groß sein, damit Scherkräfte vermieden werden und keine Koagulation auftritt. Die geeignete Drehzahl bei gegebener Rührvorrichtung kann der Fachmann ohne weiteres ermitteln, ebenso wie die Zeit, die für die ordnungsgemäße Durchmischung erforderlich ist. Bezüglich der Temperatur gilt in etwa dasselbe, die Zugabe kann, falls dies erforderlich ist, bei Temperaturen bis zu + 100 °C erfolgen, es sei als bevorzugter Bereich 25 bis 90 °C genannt, insbesondere erfolgt die Zugabe bei Temperaturen zwischen 40 und 60 °C. Zusammenfassend kann hierzu festgestellt werden, daß der Fachmann ohne weiteres in der Lage ist, die bezüglich der Parameter Temperatur, Drehzahl und Zeit erforderliche Optimierung ohne weiteres vorzunehmen.

Für das erfindungsgemäße Verfahren können handelsübliche kontinuierlich oder diskontinuierlich arbeitende für flüssig-flüssig Trennungen geeignete Zentrifugen verwendet werden. Es kann dabei vorteilhaft sein, einen Zentrifugentyp zu verwenden, bei dem der Latex einer möglichst geringen Scherung unterworfen wird, um häufige Abstellungen und Reinigungsoperationen zu vermeiden. Drehzahl und Laufzeit bzw. Verweilzeit beit kontinuierlichen Zentrifugen können entsprechend den geforderten Feststoffkonzentrationen vom Durchschnittsfachmann ohne weiteres durch einige orientierende Versuche festgelegt werden. Der Fachmann muß lediglich darauf achten, daß es in Abhängigkeit von der Wirksamkeit und der Konzentration des eingesetzten Dispergiermittels auch möglich ist, solch hohe Feststoffkonzentrationen in der polymerisatreichen flüssigen, fließfähigen Phase zu erhalten, daß die an sich bevorzugte Sprühtrocknung nicht mehr möglich ist, so daß im Falle zu hoher Feststoffkonzentrationen lediglich noch der Weg über die Strom- bzw. Trommeltrocknung möglich ist.

Beim Zentrifugieren wird eine Phasentrennung in eine a) spezifisch schwerere, polymerisatreiche Phase und b) eine spezifisch leichtere, polymerisatarme Phase erhalten. Die Trennung der beiden Phasen a) und b) erfolgt auf üblichem Wege. Besonders überraschend ist es, daß die polymerisatreiche Phase a), selbst bei Feststoffgehalten von bis zu 75 %, in manchen Fällen bis zu 80 Gew.% noch leichtfließend ist, so daß sie allen üblichen Trocknungsverfahren direkt zugeführt werden kann. Die polymerisatreiche Phase kann, wie bereits erwähnt, Feststoffgehalte bis zu 75 Gew.% aufweisen. Der Feststoffgehalt dieser Phase richtet sich danach, von welchem Feststoffgehalt man bei dem zugrundeliegenden Latex ausgeht. Er kann, je nachdem ob Latices mit Feststoffgehalten von 30 bis 50 Gew.% eingesetzt werden, 55 bis 75 Gew.% betragen. Es wird in der Regel so gearbeitet, daß Feststoffgehalte in der polymerisatreichen Phase von 65 bis 75 Gew.%, insbesondere solche von 68 bis 75 eingestellt werden.

Der Feststoffgehalt der spezifisch leichteren, polymerisatarmen Phase kann im Bereich von 0,5 bis 3 % liegen, hinzu kommt noch der Teil der Polymerisationshilfsstoffe, die vom Polymerisat durch das Zentrifugieren abgetrennt werden, so daß ein Gesamtfeststoffgehalt von 1 bis 5 Gew.% in der polymerisatarmen Phase resultieren kann. Falls gewünscht, kann aus der polymerisatarmen Phase der darin enthaltene Anteil des (Co-)Polymerisats, d.h. des Wertstoffes, auf übliche Art und Weise, z.B. durch Fällung mit Aluminiumsalz oder auf elektrophoretischem Wege abgetrennt werden. Besonders elegant ist es, jedoch die polymerisatarme Phase in den, nicht zum erfindungsgemäßen Aufarbeitungsverfahren gehörenden, Polymerisationsprozess zurückzuführen. Die in der polymerisatarmen Phase enthaltenen Copolymerisatpartikel können dann als Keimlatex für die Emulsionspolymerisation dienen. Die Art und Weise dieser Rückführung der polymerisatarmen Phase in den Polymerisationsprozess kann der Fachmann ohne weiteres vornehmen, wenn er berücksichtigt, daß für den Polymerisationsprozess dann entsprechend weniger Emulgatoren, Puffersubstanzen und dgl. zugeführt werden müssen.

Das erfindungsgemäße Verfahren kann sowohl kontinuierlich als auch diskontinuierlich durchgeführt werden. Die kontinuierliche Arbeitsweise bietet dabei die größeren Vorteile. Aber selbst bei diskontinuierlicher Durchführung des erfindungsgemäßen Verfahrens erweist es sich als vorteilhaft, daß die Sedimentationsneigung des Feststoffes in der polymerisatreichen Phase relativ gering ist, so daß diese Phase im Unterschied zu unbehandeltem Latex, vor dem Trocknen ggf. noch einige Tage gelagert werden kann, ohne daß man die Dispersion zu rühren braucht.

Während aus der spezifisch leichteren, polymerisatarmen Phase das Festprodukt durch Ausfällen gewonnen werden kann bzw. die polymerisatarme Phase in den Polymerisationsprozess zurückgeführt werden kann, muß die polymerisatreiche, leichtfließende Phase der Trocknung unterzogen werden, damit das Wertprodukt gewonnen werden kann. Die Trocknung dieser leichtfließenden polymerisatreichen Phase kann mit den üblichen Trocknern erfolgen. Besonders bevorzugt erfolgt die Trocknung mittels Trockentürmen in die entweder das zu trocknende Gut mittels Düsen oder rotierender Scheiben eingebracht wird und mit großen Mengen an warmen Gas, meist vertikal nach unten befördert wird, wobei das Wasser verdampft oder in denen das zu trocknende Gut durch einen vertikal von unten nach oben geführten warmen Gasstrom kurzzeitig in der Schwebe gehalten und dabei getrocknet wird (Wirbelschichttrockner). Ebenfalls geeignet sind sogenannte Walzentrockner, bei denen das zu trocknende Gut kurzzeitig auf eine beheizte, sich drehende Metallfläche aufgebracht wird.

Die Morphologie der erfindungsgemäß erhaltenen Festprodukte nach dem Trocknen ist weitgehend identisch mit Produkten, die nach den bekannten Verfahren unter Verwendung des gleichen Trocknungsverfahrens gewonnen worden sind. Dementsprechend werden auch die Verarbeitungseigenschaften dieser Feststoffe sowie die Eigenschaften der aus den Polymerisaten hergestellten Fertigteile dieselben sein.

Hervorzuheben ist jedoch, daß beim erfindungsgemäßen Verfahren die Konzentration der Hilfsstoffe im getrockneten Produkt erheblich, d.h. um ca. 60 % oder noch mehr gegenüber den nach bekannten Verfahren direkt getrockneten Latices reduziert werden kann. Die erfindungsgemäß erhaltenen Feststoffe weisen daher erheblich geringere Hilfsstoffkonzentrationen auf. Es wurde ferner festgestellt, daß die Viskosität von Plastisolen, die durch Abmischung von Weichmachern mit erfindungsgemäß erhaltenem Polyvinylchlorid, das sprühgetrocknet wurde, niedriger ist, als bei PVC-Sorten, die direkt nach der Polymerisation bzw. Entgasung getrocknet worden sind. Dies trifft insbesondere auf PVC-Sorten zu, die durch kontinuierliche Emulsionspolymerisation hergestellt worden sind. Solche Produkte ergeben in der Regel relativ hochviskose Plastisole, wenn nach der Trocknung nicht noch weitere Aufarbeitungsschritte wie Sichten oder Mahlen durchgeführt werden. Die nach dem erfindungsgemäßen Verfahren erhaltenen Festprodukte haben, wie vorstehend erwähnt, demgegenüber eine so geringe Plastisol-Anfangsviskosität, daß die vorstehend erwähnten zusätzlichen Aufarbeitungsschritte entfallen können. Dies bedingt zusätzliche Vorteile des erfindungsgemäßen Verfahrens gegenüber herkömmlichen Verfahren. Das erfindungsgemäße Verfahren wird anhand der nachstehenden Beispiele und Versuche näher erläutert. Die in den Beispielen und Versuchen genannten Teile und Prozente beziehen sich, sofern nichts anderes vermerkt ist, auf das Gewicht.

Beispiele 1 bis 7

In einer Versuchsreihe wurden je 100 Teile enes durch kontinuierliche Emulsionspolymerisation hergestellten PVC-Latex mit einem Feststoffgehalt von 49 %, der als Emulgator ca. 2,8 % Alkylsulfonat enthielt, in einem 2 l fassenden, mit einem Blattrührer der Abmessung Höhe × Durchmesser = 40 × 40 mm ausgerüsteten Rührbehälter auf die in der Tabelle angegebenen Temperaturen erwärmt. Unter Rühren, mit den in der Tabelle genannten Drehzahlen wurden 0,25 Teile eines im Handel erhältlichen Copolymerisats aus Maleinsäurenahydrid und Methylvinyläther im Molverhältnis 1: 1, das eine Viskositätszahl im Bereich von 1,0 bis 1,5 aufwies und das zuvor in wenig Wasser gelöst worden war, zugegeben. Im einzelnen wurden die in der Tabelle 1 genannten korrespondierenden Temperaturen/Drehzahlen und Rührzeiten eingehalten. Anschließend wurde die Dispersion auf Zimmertemperatur abgekühlt und auf einer diskontinuierlich arbeitenden Zentrifuge bei 1.700 g 5 min lang zentrifugiert. Es bildeten sich dabei zwei flüssige Phasen, eine polymerisatreiche, leichtfließende Phase a) und eine spezifisch leichtere, polymerisatarme Phase b). Die Feststoffgehalte dieser Phasen, in Prozent, sind in der Tabelle ebenfalls mit aufgeführt.

TABELLE 1

| Beispiel | Temperatur °C | Drehzahl min⁻¹ | Rührzeit min | Feststoffgehalte a) polymerisatreiche Phase | b) polymerisatarme Phase |
|---|---|---|---|---|---|
| 1 | 25 | 150 | 30 | 68,3 | 5,5 |
| 2 | 40 | 30 | 30 | 71,1 | 5,5 |
| 3 | 60 | 30 | 30 | 71,7 | 4,8 |
| 4 | 60 | 120 | 30 | 71,1 | 5,3 |
| 5 | 80 | 400 | 60 | 73,1 | 4,9 |
| 6 | 90 | 400 | 60 | 71,1 | 5,1 |
| 7 | 90 | 200 | 30 | 70,0 | 4,4 |

Beispiel 8

Zu 100 Teilen des in den Beispielen 1 bis 7 beschriebenen Latex wurden bei 60 °C 0,25 Teile des MSA-Copolymerisates zugegeben und 30 min bei 60 Umdrehungen gerührt. Nach dem Zentrifugieren (Bedingungen wie Beispiele 1 bis 7), wurde eine flüssige, polymerisatreiche Phase mit einem Feststoffgehalt von 71,8 % erhalten. Diese wurde in einer Sprühtrocknung, unter den nachstehend genannten Bedingungen mit Hilfe einer im Handel erhältlichen Zweistoffdüse der Fa. Nubilosa getrocknet.

Lufttemperatur im Trockner
| | |
|---|---|
| ein | 130 °C |
| aus | 55 °C |

Feststoffgehalt im
Sprühgas [g/m³]     33
Korngröße     40 % > 10 μm
    1 % > 63 μm

## Vergleichsversuch 8a

Wurde der in Beispiel 8 beschriebene Latex direkt der Sprühtrocknung bzw. der Walzentrocknung unterzogen, so wurden Festprodukte erhalten, die einen erheblich höheren Gehalt an wasserlöslichen Hilfsstoffen, die aus der Polymerisation herrühren, z.B. Starterreste, Puffersalze, Emulgatoren, aufwiesen. Setzt man beim Vergleichsversuch 8a den Restgehalt an wasserlöslichen Hilfsstoffen willkürlich gleich 100, so betrugt dieser nach dem erfindungsgemäßen Verfahren (Versuch 8) nur noch ca. 40 %.

## Beispiele 9 bis 13

In den folgenden Beispielen wurde, wie vorstehend unter 1 bis 7 beschrieben, verfahren. Die Zugabe des Dispergiermittels erfolgte bei Temperaturen im Bereich von 40 bis 60 °C, Drehzahl und Rührzeit wurden so abgestimmt, daß eine homogene Verteilung resultierte. Lediglich in Beispiel 11 wurde ein anderes Copolymerisat des MSA mit Methylmethacrylat im Molverhältnis 1 : 1 verwendet, das einen K-Wert von 27 aufwies. Die Menge des nicht ionogenen Dispergiermittels, in Prozent, die Viskositätszahl, der Feststoffgehalt des Latex in Prozent sowie die in der polymerisatreichen und polymerisatarmen Phase nach dem Zentrifugieren erhaltenen Feststoffgehalte in Prozent sind in der Tabelle 2 aufgeführt.

### TABELLE 2

| Bsp. | Viskositätszahl η spez. | Menge an Dispergiermittel [%] | Feststoffgehalt des Latex [%] | Feststoffgehalte | |
|---|---|---|---|---|---|
| | | | | a) polymerisat-reiche Phase | b) polymerisat-arme Phase |
| 9 | 1,5-2,0 | 0,5 | 49,9 | 70,7 | 4,7 |
| 10 | 1,0-1,5 | 0,4 | 48,8 | 73,1 | 4,9 |
| 11 | 27 (*) | 1,9 | 48,8 | 65,4 | 7,7 |
| 12 | 1,0-1,5 | 0,5 | 43,0 | 64,8 | 7,4 |
| 13 | 3,6-4,5 | 1,0 | 49,8 | 66,1 | 6,7 |

(*) = K-Wert

## Ansprüche

1. Verfahren zur Aufbereitung von wäßrigen (Co-)Polymerisatdispersionen, die durch Emulsionspolymerisation von Vinylchlorid oder bis zu 50 Gew.% an mit Vinylchlorid copolymerisierbaren Monomeren erhalten worden sind und die Feststoffgehalte von 30 bis 50 % aufweisen, durch Zugabe von nicht ionogenen Dispergiermitteln unter Rühren und ggf. unter Erwärmung und anschließendes Zentrifugieren unter Auftrennung der (Co-)Polymerisatdispersion in eine polymerisatreiche Phase und eine polymerisatarme flüssige Phase und Trocknung der polymerisatreichen Phase, dadurch gekennzeichnet, daß man als nicht ionogene Dispergiermittel 0,05 bis 5 Gew.%, bezogen auf Polyvinylchlorid oder dessen Copolymerisate, eines wasserlöslichen Maleinsäureanhydrid-Copolymerisates zugibt und nach dem Zentrifugieren zwei leichtfließende, flüssige Phasen a) eine spezifisch schwerere, polymerisatreiche Phase und b) eine spezifisch leichtere, polymerisatarme Phase gewinnt.

2. Verfahren nach Anspruch 1, dadurch gekennzeichnet, daß die polymerisatreiche Phase a) sprühgetrocknet wird.

3. Verfahren nach Anspruch 1, dadurch gekennzeichnet, daß in dem Maleinsäureanhydrid-Copolymerisat ein Alkylvinyläther mit einer Kettenlänge des Alkylrestes von 1 bis 4 C-Atomen als Comonomeres verwendet wird.

4. Verfahren nach Anspruch 1, dadurch gekennzeichnet, daß die (Co-)Polymerisatdispersion auf kontinuierlichem Wege hergestellt worden ist.

**Claims**

1. A process for working up aqueous (co)polymer dispersions which have been obtained by emulsion polymerization of vinyl chloride or up to 50 % by weight of monomers copolymerizable with vinyl chloride and have a solids content of from 30 to 50 %, by adding nonionic dispersing agents while stirring and, if desired, while heating, followed by centrifuging to separate the (co)polymer dispersion into a polymer-rich phase and a liquid polymer-poor phase and drying the polymer-rich phase, characterized in that from 0.05 to 5 % by weight, based on polyvinyl chloride or copolymers thereof, of a water-soluble maleic anhydride copolymer is added as the nonionic dispersing agent and, upon centrifuging, two readily flowable liquid phases are obtained, namely a) a polymer-rich phase of higher specific gravity and b) a polymer-poor phase of lower specific gravity.

2. A process as claimed in claim 1, characterized in that the polymer-rich phase a) is spray-dried.

3. A process as claimed in claim 1, characterized in that an alkyl vinyl ether in which the alkyl radical has a chain length of from 1 to 4 carbon atoms is used as comonomer in the maleic anhydride copolymer.

4. A process as claimed in claim 1, characterized in that the (co)polymer dispersion has been produced in a continuous manner.

**Revendications**

1. Procédé pour le traitement de dispersions aqueuses de (co)polymères qui ont été obtenues par polymérisation en émulsion de chlorure de vinyle ou de mélanges contenant jusqu'à 50 % en poids de monomères copolymérisables avec le chlorure de vinyle et qui présentent des teneurs en matières solides de 30 à 50 %, par addition de dispersants non ionogènes sous agitation et, le cas échéant, sous chauffage, suivie d'une centrifugation avec séparation de la dispersion de (co)polymère en une phase riche en polymère et une phase liquide pauvre en polymère, et d'un séchage de la phase riche en polymère, caractérisé en ce qu'on ajoute, en tant que dispersant non ionogène, 0,05 à 5 % en poids, par rapport au chlorure de polyvinyle ou aux copolymères de celui-ci, d'un copolymère d'anhydride maléique soluble dans l'eau, et qu'on obtient, à la suite de la centrifugation, deux phases liquides très fluides, à savoir a) une phase riche en polymère, de poids spécifique plus élevé et b) une phase pauvre en polymère, de poids spécifique plus faible.

2. Procédé selon la revendication 1, caractérisé en ce que la phase riche en polymère a) est séchée par pulvérisation.

3. Procédé selon la revendication 1, caractérisé en ce qu'on utilise comme comonomère, dans le copolymère d'anhydride maléique, un éther alcoylvinylique ayant une longueur de chaîne du radical alcoyle de 1 à 4 atomes de carbone.

4. Procédé selon la revendication 1, caractérisé en ce que le (co)polymère a été préparé par polymérisation en émulsion de façon continue.